# EUROPÄISCHE PATENTANMELDUNG

(11) **EP 3 246 496 A1**
(43) Veröffentlichungstag der Anmeldung: **22.11.2017**
(21) Anmeldenummer: 17171502.2
(22) Anmeldetag: 17.05.2017
(51) Int. Cl.: E04H 15/34, F16B 7/04

(54) **GLEITER FÜR EIN RAHMENPROFIL**

(30) Priorität: 18.05.2016 DE 102016109145
(71) Anmelder: PATEA GmbH, 8630 Rüti ZH (CH)
(72) Erfinder: BÄR, Beat, 8630 Rüti (CH)
(74) Vertreter: Patentanwälte und Rechtsanwalt Weiß, Arat & Partner mbB

(57) **Zusammenfassung**

Bei einem Gleiter für ein Rahmenprofil (6) mit einer Öffnung (14) für das Rahmenprofil (6), wobei das Rahmenprofil (6) einen Arretierbolzen (8) aufweist, und einem Ausleger (15, 16), wobei der Ausleger (15, 16) eine schwenkbare und/oder festlegbare Halterung (3, 4) aufweist, soll die Halterung (3, 4) ein Dachprofil (7) umfassen.

## Beschreibung

### Technisches Gebiet

Die Erfindung betrifft einen Gleiter für ein Rahmenprofil nach dem Oberbegriff des Anspruchs 1.

### Stand der Technik

Aus dem Stand der Technik ist bekannt, das Dachprofile fest an einem Bodenprofil befestigt werden, um eine notwendige Festigkeit der Konstruktion zu erreichen. In diesem Zusammenhang wird auf die DE 88 07 754 U1 hingewiesen.

### Aufgabe der Erfindung

Aufgabe der Erfindung ist es einen Gleiter zur Verfügung zu stellen, welcher einen flexiblen und einfachen Aufbau von Dachprofilen ermöglicht.

### Lösung der Aufgabe

Zur Lösung der Aufgabe führen die Merkmale nach dem Anspruch 1. Vorteilhafte Ausgestaltungen sind in den Unteransprüchen beschrieben.

Ein erfindungsgemässer Gleiter soll für ein Rahmenprofil zum Einsatz kommen. Ein erfindungsgemässes Rahmenprofil erstreckt sich hier senkrecht zu einem Boden bei einem ordnungsgemässen Einsatz im Rahmen eines Zeltes oder einer Wandung. Bei Zelten kann es sich hierbei um Messezelte oder Festzelte oder dergleichen handeln. Bei der Wandung kann es sich beispielsweise um Messewand oder eine Bürowand oder dergleichen handeln.

Der Gleiter weist einen Grundkörper mit einer Öffnung für das Rahmenprofil auf. Die Form und Grösse der Grundkörpers ist derart gewählt, dass das Rahmenprofil in der Öffnung gleiten kann. Dabei ist der Grundkörper ein Rohr- oder Hohlprofil. Das Hohlprofil weist eine Länge von bevorzugt 5 cm bis 20 cm auf.

Das Rahmenprofil weist einen Arretierbolzen auf. Der Arretierbolzen ist federgelagert und wirkt mit Ausnehmungen an dem Gleiter derart zusammen, dass der Gleiter an einer definierten Position gehalten wird. Dazu greift der Arretierbolzen in eine Ausnehmung des Gleiters und kann in das Rahmenprofil hineingedrückt werden, um den Gleiter zu verstellen.

Der Gleiter weist einen Ausleger auf, wobei der Ausleger eine schwenkbare und/oder festlegbare Halterung aufweist. Die Halterung ist derart gestaltet, dass sie über einen Verbindungsbolzen zu dem Ausleger verschwenkt und festgelegt werden kann. Dazu wird der Verbindungsbolzen gedrückt und die Halterung in eine gewünschte Position geschwenkt. Anschliessend setzt der Verbindungsbolzen durch Loslassen die Halterung gegenüber dem Ausleger fest. Der Verbindungsbolzen können mit jeweils einem Durchgangsloch versehen sein, nicht nur um Material zu sparen, sondern um spätere Anbindungen von Zubehör oder Kabeldurchführungen zu ermöglichen.

An dem Grundkörper sind bevorzugt zwei Ausleger angeordnet, welche jeweils mit je einer eigenen Halterung verbindbar sind. Die Ausleger sind ferner mit Verstärkungsrippen versehen. Die Verstärkungsrippen erstrecken sich dabei aus dem Umfang des Auslegers hinaus in den Bereich zwischen der Halterung und dem Grundkörper. Dadurch wird eine besondere Festigkeit erreicht.

Erfindungsgemäss ist die Halterung derart ausgeführt, dass sie ein Dachprofil umfasst. Hierbei ist besonders erfinderisch, dass Gleiter in solchen Konstruktionen nicht für die Halterung von Dachprofilen genutzt wurden, da man davon ausging, dass keine ausreichende Festigkeit vorhanden sein würde.

Die Halterung und der Ausleger werden durch den Verbindungsbolzen durchgriffen und sind so miteinander verbunden.

Ausserdem ist eine Halterungskontaktfläche der Halterung zu einer Auslegerkontaktfläche des Auslegers verschwenkbar angeordnet. Das bedeutet, dass die Halterungskontaktfläche mit der Auslegekontaktfläche bevorzugt ringförmig übereinstimmt. Aufgrund der Ringform kann die Halterung einfacher gegenüber dem Ausleger verstellt werden und weist trotzdem genug Kontaktfläche zur Aufnahme von Kräften auf. Bevorzugt weist die Ringform einen inneren Durchmesser von 1 bis 1,5 cm und einen äusseren Durchmesser von 2,5 bis 4 cm auf.

Die Halterung weist eine Aufnahme auf, geeignet zum Einschub des Dachprofils. Dazu ist die Aufnahme an die Ausmasse, Form und Grösse des Dachprofils anzupassen. Die Aufnahme soll dabei eine solche Tiefe aufweisen, dass 1 cm bis 4 cm des Dachprofils in die Aufnahme eingeschoben werden können. Dadurch wird eine besondere Stabilität erreicht.

Die Aufnahme weist im Wesentlichen die Hälfte der Ausmasse der Öffnung auf. Dies ergibt sich aus dem Umstand, dass der Ausleger und die Halterung jeweils zur Hälfte die Breite des Rahmenprofils wiedergeben.

Weiter ist eine Druckkopffeder an dem Grundkörper vorhanden. Die Druckkopffeder ist derart ausgestaltet, dass sie den federgelagerten Arretierbolzens des Rahmenprofils runterdrücken, das heisst in das Rahmenprofil hineindrücken kann, um den Grundkörper an dem Rahmenprofil weiterbewegen zu können.

Die Druckknopffeder dient also der Betätigung bzw. Entriegelung eines von mehreren federgelagerten Arretierbolzens, welche in entsprechenden nicht näher gezeigten Bohrungen in dem Rahmenprofil gelagert sind. Der Grundkörper des Gleiters weist eine Aussparung auf, in welche jeweils ein Arretierbolzen aufgenommen werden kann, wenn der Grundkörper des Gleiters an dem Rahmenprofil entlanggleitet. Die weist eine scheibenartigen Druckfläche auf, die eine einfache Betätigung durch einen Finger ermöglicht. Auf diese Weis wird verhindert, dass ein Einklemmen von Haut oder Fingerkuppen geschehen kann.

Der erfindungsgemässe Gleiter wirkt wie Verbindungsgelenk, wobei hier der Gleiter, das Drehgelenk, der Verbindungsbolzen, und die Druckknopffeder praktisch eine Einheit bilden. Das Verbindungsgelenk bzw der Gleiter verbindet das Standbein in Form des Rahmenprofils mit den Dachprofilen.

Das Grundkörper zeichnet sich dadurch aus, dass sowohl die Gelenkhälfte des Auslegers als auch die Halterung über grosse Kontaktbereiche und Formschluss verfügen, und somit die Kräfte die auf den Gleiter einwirken besser aufnehmen kann. Querkräfte werden über die grosse Kontaktflächen zwischen den Elementen aber auch über die Zylinderfläche des Grundkörpers bzw Lagers aufgenommen. Die Restkräfte werden über Verstärkungsrippen und direkten Kontakt, optimal an die Führungshülse bzw den Grundkörper des Gleiters abgeleitet. Dieser Formschluss ermöglicht auch eine Verbesserung der Führung der Gelenkelemente zueinander.

Dadurch wir die gesamte Einheit, bestehend aus dem Rahmenprofil bzw. dem Standbein, dem Gleiter und dem Dachprofil nicht nur stabiler sondern auch präziser geführt. Die grundsätzliche Konzeption des gesamten Gleiters zielt auch auf eine einfache werkzeuglose Montage und Demontage ab, jedoch wird eine unabsichtliche Demontage während der Benutzung unterbunden, da der Verbindungsbolzen rein auf Formschluss und Klemmung ausgelegt wurde und nicht auf mechanische Kräfte, welche durch den Auf- und Abbau des Zeltsystems auftreten. Er ist sozusagen funktional zur Zeltbewegung entkoppelt.

Der Verbindungsbolzen ist nicht wie bei vielen Produkten die Achse am Gelenk: Der Verbindungsbolzen ruht in Halterung und Ausleger und koppelt den Gleiter mit dem Dachprofil.

Das Dachprofil wurde im Querschnitt aber auch in der Herstellung optimiert. Der neue Querschnitt nimmt optimal Vertikal- und Horziontalkräfte auf, die über den hohen Formschluss in das Gelenk abgeführt werden. Dazu weist das Dachprofil beispielsweise eine Verrippung zur Versteifung auf.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische Ansicht eines erfindungsgemässen Gleiters für ein Rahmenprofil in Gebrauchslage an einem Rahmenprofil;
- Figur 2: eine Draufsicht auf den Gleiter an dem Rahmenprofil in Figur 1;
- Figur 3: eine Seitenansicht des Gleiters an dem Rahmenprofil in Figur 1;
- Figur 4: die Seitenansicht des Gleiters an dem Rahmenprofil in Figur 3 um 90° gegen den Uhrzeigersinn gedreht;
- Figur 5: eine perspektivische Ansicht auf den Gleiter nach Figur 1 ohne Rahmenprofil;
- Figur 6: eine Explosionsansicht des Gleiters in Figur 5;
- Figur 7: eine Führungshülse des erfindungsgemässen Gleiters mit einer Druckknopffeder in Gebrauchslage an dem Rahmenprofil;
- Figur 8: eine Seitenansicht des Gleiters in Figur 5;
- Figur 9: eine Schnittansicht des Gleiters in Figur 5 entlang der Linie IX - IX;
- Figur 10: eine Schnittansicht des Gleiters in Figur 5 entlang der Linie X - X;
- Figur 11: eine Draufsicht auf die Führungshülse des Gleiters in Figur 7;
- Figur 12: eine Schnittansicht der Führungshülse des Gleiters in Figur 11 entlang der Linie XII - XII; und
- Figur 13: perspektivische Ansichten der Druckkopffeder.

### Ausführungsbeispiel

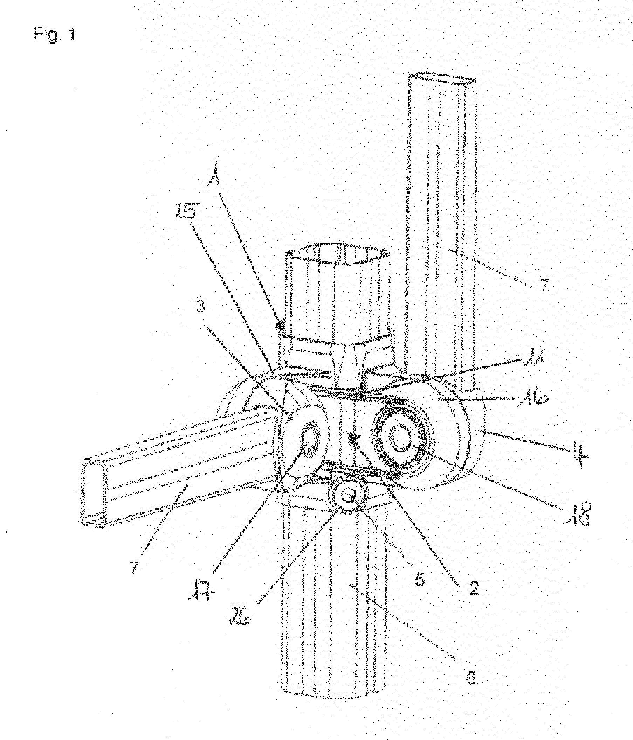

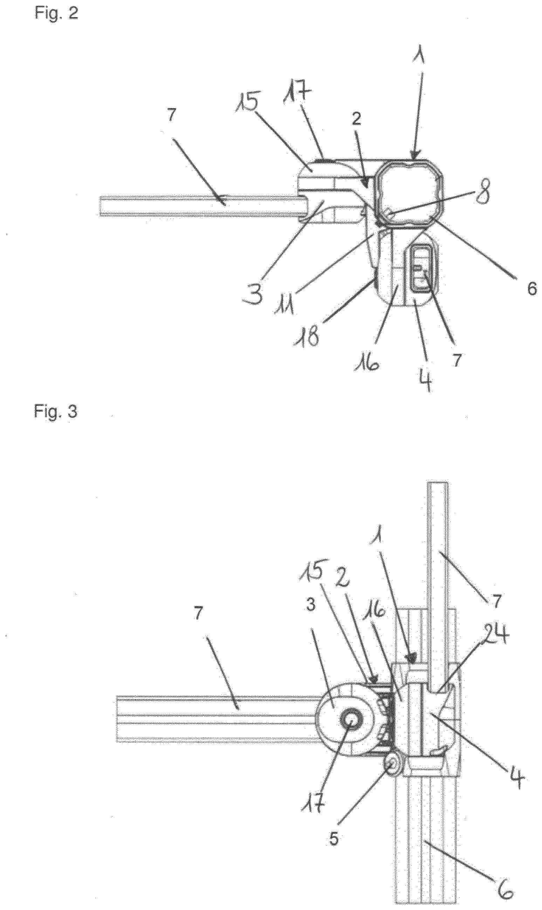

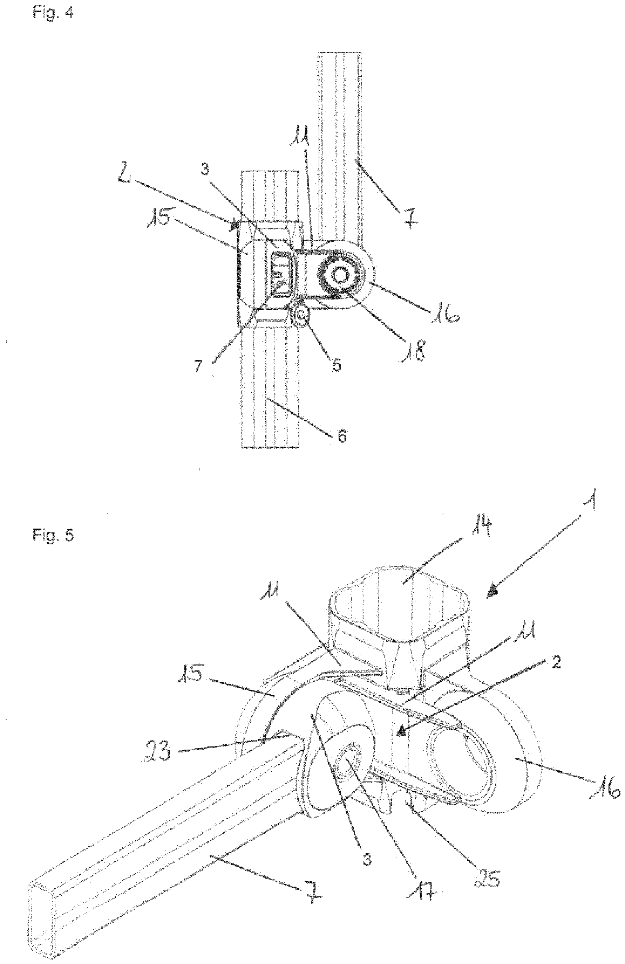

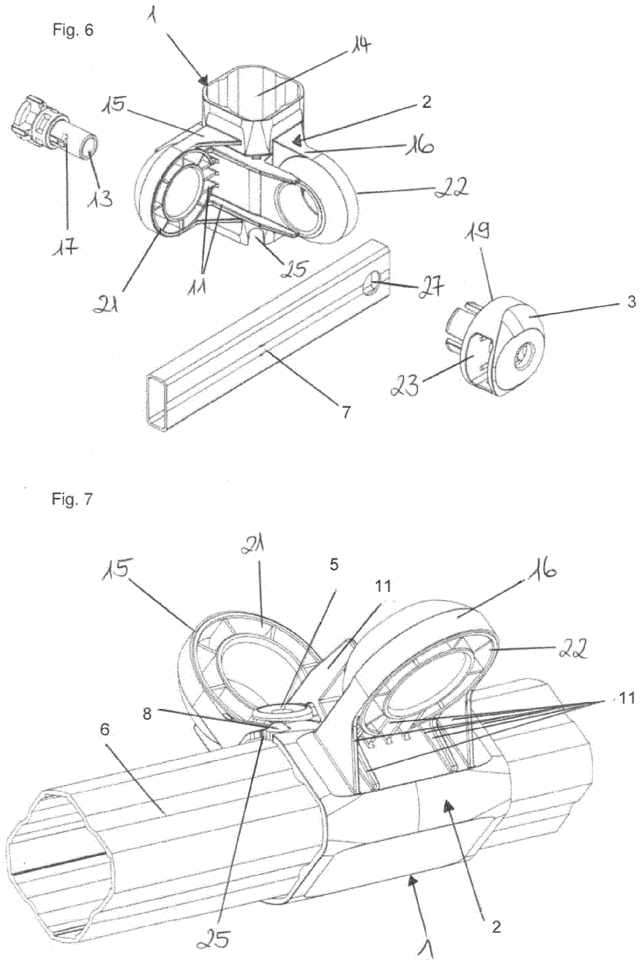

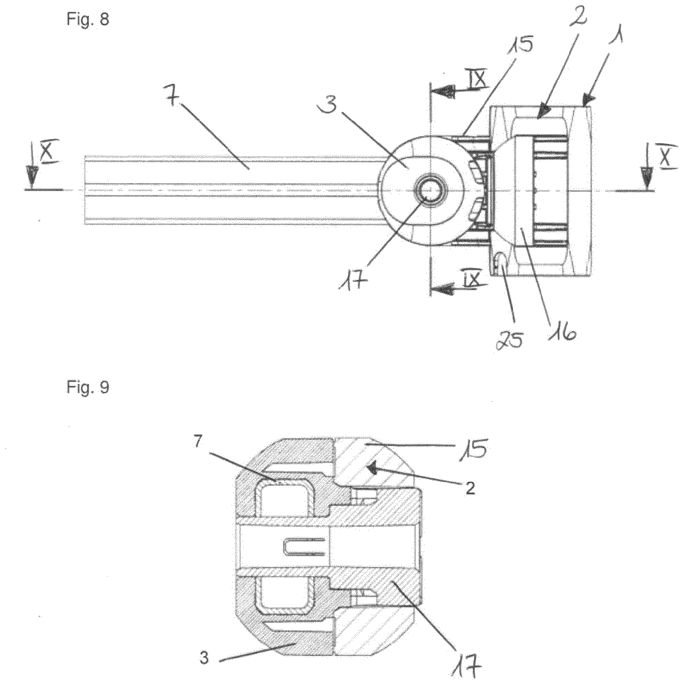

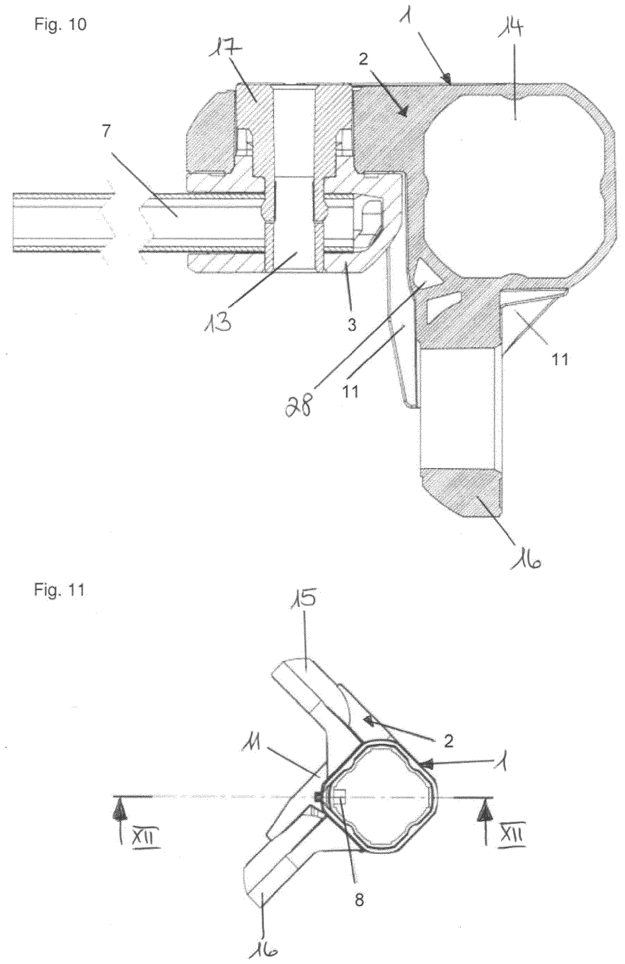

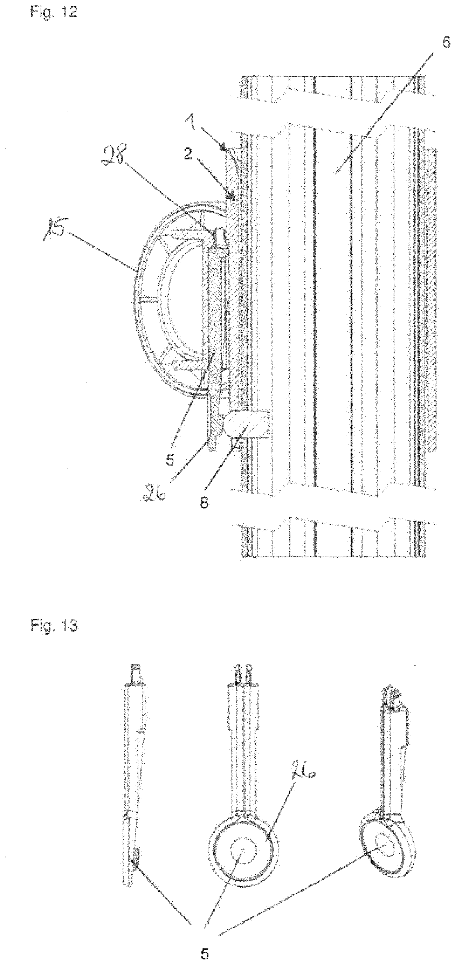

Gemäss den Figuren 1 bis 13 weist ein Gleiter 1 für ein Rahmenprofil 6 einen Grundkörper 2, welcher mit einer Öffnung 14 für das Rahmenprofil 6 versehen ist, so dass der Gleiter 1 bzw. der Grundkörper 2 an dem Rahmenprofil 6 entlanggleiten kann.

An dem Grundkörper 2 sind bevorzugt zwei Ausleger 15 und 16 angeordnet, welche jeweils mit einer Halterung 3 bzw. 4 verbindbar sind. Die Halterung 3 und der Ausleger 15 sind über einen Verbindungsbolzen 17 durchgriffen und miteinander verbunden. Die Halterung 4 und der Ausleger 16 sind über einen Verbindungsbolzen 18 durchgriffen und miteinander verbunden. Die Ausleger 15 und 16 sind ferner mit Verstärkungsrippen 11 versehen. Die Verbindungsbolzen 17 und 18 können mit jeweils einem Durchgangsloch 13 versehen sein, nicht nur um Material zu sparen, sondern um spätere Anbindungen von Zubehör oder Kabeldurchführungen zu ermöglichen.

Die Halterungen 3 und 4 sind schwenkbar und/oder festlegbar mit den Auslegern 15 und 16 verbindbar, wobei eine Halterungskontaktfläche 19 der Halterung 3 zu einer Auslegerkontaktfläche 21 des Auslegers 15 bzw. eine Halterungskontaktfläche (nicht näher gezeigt) der Halterung 4 zu einer Auslegerkontaktfläche 22 des Auslegers 16 verschwenkbar ist. Sowohl die Halterungskontaktflächen 19 und die Auslegerkontaktflächen 21 und 22 sind bevorzugt ringförmig ausgebildet.

Die Halterungen 3 und 4 weisen jeweils eine Aufnahme 23 bzw. 24 auf, welche geeignet sind, um jeweils ein Dachprofil 7 aufzunehmen. Die Aufnahmen 23 und 24 weisen im Wesentlichen die Hälfte der Ausmasse der Öffnung 14 des Grundkörpers 2 auf. Über ein oder mehrere Dachprofile 7 kann ferner eine Kabeldurchführung möglich sein, da das Dachprofil 7 bevorzugt als Hohlprofil ausgebildet ist. Das Dachprofil 7 weist eine Durchgangsbohrung 27 auf, durch welche das Dachprofil 7 in seiner Aufnahme 23 bzw. 24 durch den Verbindungsbolzen 17 bzw. 18 gehalten wird.

An dem Grundkörper 2 des Gleiters 1 ist weiterhin eine Druckknopffeder 5 vorhanden, welche in einer Längsbohrung 28 in dem Grundkörper 2 des Gleiters 1 entlang des Grundkörpers 2 und bevorzugt parallel zu dem Rahmenprofil 6 geführt ist. Die Druckknopffeder 5 dient der Betätigung bzw. Entriegelung eines von mehreren federgelagerten Arretierbolzens 8, welche in entsprechenden nicht näher gezeigten Bohrungen in dem Rahmenprofil 6 gelagert sind. Der Grundkörper 2 des Gleiters 1 weist eine Aussparung 25 auf, in welche jeweils ein Arretierbolzen 8 aufgenommen werden kann, wenn der Grundkörper 2 des Gleiters 1 an dem Rahmenprofil 6 entlanggleitet.

Die Druckknopffeder 5 deckt mit einer scheibenartigen Druckfläche 26 den Arretierbolzen 8 so ab, dass ein Einklemmen von Haut oder Fingerkuppen verhindert wird. Ferner wirkt eine gefühlte ausführende Kraft reduziert, da anstatt auf den kleinen Arretierbolzen 8 auf die Druckfläche 26 der Druckknopffeder 5 gedrückt wird, wobei ein Druckknopf 29 auf einer dem Rahmenprofil 6 zugewandten Seite der Druckfläche 26 mit dem Arretierbolzen 8 in Wirkverbindung gelangt.

Bezugnehmend auf die Figuren 1 - 13 erklärt sich die Funktionsweise der erfindungsgemässen Vorrichtung folgendermassen:
Der Gleiter 2 und das Rahmenprofil 6 sind Teil beispielsweise eines nicht näher gezeigten faltbaren Zeltes, welches in einem Ausgangszustand zusammengefaltet ist. In diesem Ausgangszustand befindet sich der Gleiter 1 bzw. der Grundkörper 2 bevorzugt in einer unteren Position an dem Rahmenprofil 6. Untere Position bedeutet, dass sich der Grundkörper 2 bevorzugt an einem der Enden des Rahmenprofils 6 befindet. Die Dachprofile 7 in der Ausnahme 23 bzw. 24 sind dann derart positioniert, dass eine Längsseite der Dachprofile 7 parallel zu einer Längsseite des Rahmenprofils 6 verläuft. Der Arretierbolzen 8 des Rahmenprofils 6 befindet sich in Eingriff mit der Aussparung 25 des Grundkörpers 2 des Gleiters 1.

Soll das Zelt auseinandergefaltet und damit in Gebrauchslage gebracht werden, muss lediglich der Gleiter 1 bzw. sein Grundkörper 2 entlang des Rahmenprofils 6 verschoben werden. An gewünschter Position/Höhe an dem Rahmenprofil 6 überfährt der Grundkörper 2 den entsprechenden Arretierbolzen 8 in dem Rahmenprofil 6, bis dieser in die Aussparung 25 in dem Grundkörper 2 einfährt.

Anschliessend können die Dachprofile 7 in ihre gewünschte Lage geschwenkt werden. Dies erfolgt über eine Drehung der Halterungen 3 bzw. 4 an den Auslegern 15 bzw. 16.

Soll das Zelt bzw. der Gleiter 1 in seinen Ausgangszustand gebracht werden, müssen zunächst die Dachprofile 7 wieder in ihre Ausgangsposition parallel zu dem Rahmenprofil 6 geschwenkt werden. Dann muss der Grundkörper 2 bzw. die Aussparung 25 aus ihrem Eingriff mit dem Arretierungsbolzen 8 des Rahmenprofils 6 gebracht werden. Dazu wird auf die Druckfläche 26 der Druckknopffeder 5 gedrückt, wodurch der Druckknopf 29 wiederum den Arretierungsbolzen 8 gegen den Druck einer nicht näher gezeigten Feder in dem Rahmenprofil 6 nach innen, d.h. in Richtung eines Inneren des Rahmenprofils 6 drückt.

Dadurch kann der Grundkörper 2 des Gleiters 2 an dem Rahmenprofil 6 in die gewünschte Richtung verschoben werden.

**Bezugszeichenliste**

| | | | | | |
|---|---|---|---|---|---|
| 1 | Gleiter | 34 | | | |
| 2 | Grundkörper | 35 | | | |
| 3 | Halterung | 36 | | | |
| 4 | Halterung | 37 | | | |
| 5 | Druckknopffeder | 38 | | | |
| 6 | Rahmenprofil | 39 | | | |
| 7 | Dachprofil | 40 | | | |
| 8 | Arretierbolzen | 41 | | | |
| 9 | | 42 | | | |
| 10 | | 43 | | | |
| 11 | Verstärkungsrippe | 44 | | | |
| 12 | | 45 | | | |
| 13 | Durchgangsloch | 46 | | | |
| 14 | Öffnung | 47 | | | |
| 15 | Ausleger | 48 | | | |
| 16 | Ausleger | 49 | | | |
| 17 | Verbindungsbolzen | 50 | | | |
| 18 | Verbindungsbolzen | 51 | | | |
| 19 | Halterungskontaktfläche | 52 | | | |
| 20 | | 53 | | | |
| 21 | Auslegerkontaktfläche | 54 | | | |
| 22 | Auslegerkontaktfläche | 55 | | | |
| 23 | Aufnahme | 56 | | | |
| 24 | Aufnahme | 57 | | | |
| 25 | Aussparung | 58 | | | |
| 26 | Druckfläche | 59 | | | |
| 27 | Durchgangsbohrung | 60 | | | |
| 28 | Längsbohrung | 61 | | | |
| 29 | Druckknopf | 62 | | | |
| 30 | | 63 | | | |
| 31 | | 64 | | | |
| 32 | | 65 | | | |
| 33 | | 66 | | | |

## Patentansprüche

1. Gleiter für ein Rahmenprofil (6) mit einer Öffnung (14) für das Rahmenprofil (6), wobei das Rahmenprofil (6) einen Arretierbolzen (8) aufweist, und einem Ausleger (15, 16), wobei der Ausleger (15, 16) eine schwenkbare und/oder festlegbare Halterung (3, 4) aufweist,
**dadurch gekennzeichnet,**
**dass** die Halterung (3, 4) ein Dachprofil (7) umfasst.

2. Gleiter nach Anspruch 1, **dadurch gekennzeichnet, dass** die Halterung (3, 4) und der Ausleger (15, 16) über einen Verbindungsbolzen (17, 18) durchgriffen und verbunden sind.

3. Gleiter nach Anspruch 1 oder 2, **dadurch gekennzeichnet, dass** eine Halterungskontaktfläche (19) der Halterung (3, 4) zu einer Auslegerkontaktfläche (21, 22) des Auslegers (15, 16) verschwenkbar ist.

4. Gleiter nach einem der vorigen Ansprüche, **dadurch gekennzeichnet, dass** die Halterung (3, 4) eine Aufnahme (23, 24) aufweist, geeignet zum Einschub des Dachprofils (7).

5. Gleiter nach Anspruch 4, **dadurch gekennzeichnet, dass** die Aufnahme (23, 24) im wesentlichen die Hälfte der Ausmasse der Öffnung (14) aufweist.

6. Gleiter nach einem der vorigen Ansprüche, **dadurch gekennzeichnet, dass** eine Druckkopffeder (5) vorhanden ist, geeignet zum Betätigen des federgelagerten Arretierbolzens (8) des Rahmenprofils (6).

7. Gleiter nach einem der vorigen Ansprüche, **dadurch gekennzeichnet, dass** der Ausleger (15, 16) mit Verstärkungsrippen (11) versehen ist.
